# EUROPEAN PATENT SPECIFICATION

(11) **EP 4 291 418 B1**
(45) Date of publication and mention of the grant of the patent: **09.12.2026**
(21) Application number: 22850568.1
(22) Date of filing: 15.12.2022
(51) Int. Cl.: B60B 9/00

(54) **A WHEEL SUSPENSION SYSTEM**
RADAUFHÄNGUNGSSYSTEM
SYSTÈME DE SUSPENSION DE ROUE

(30) Priority: 05.05.2022 IN 202221026229
(43) Date of publication of application: 20.12.2023
(73) Proprietor: Rasal, Mitesh, Annex Pune 411036 (IN); Sutar, Shubham, Peth Pune 411002 (IN); Ettam, Suraj, Bibwewadi Pune 411037 (IN)
(72) Inventor: Rasal, Mitesh, Annex Pune 411036 (IN); Sutar, Shubham, Peth Pune 411002 (IN); Ettam, Suraj, Bibwewadi Pune 411037 (IN)
(74) Representative: Cabinet Chaillot
(86) International application number: PCT/IN2022/051077
(87) International publication number: WO 2023/214422

(56) References cited:
- WO-A1-2012/017202
- WO-A1-2013/175178
- GB-A- 191 116 994
- GB-A- 2 482 509
- GB-A- 2 502 296
- US-A- 1 021 440
- US-A- 1 179 974
- US-A- 1 345 912

## Description

### Field of the Invention

The present invention relates to a wheel suspension system. More particularly, the present invention relates to a multi-axial wheel suspension system.

### Background of the Invention

Background description includes information that may be useful in understanding the present invention. It is not an admission that any of the information provided herein is prior art or relevant to the present invention, or that any publication specifically or implicitly referenced is prior art.

It has been seen in the conventional wheels that spokes which are multiple in number or solid/mag spokes are used. Spokes are assembled in multiple holes in a rim ultimately increases weight of the wheel, when such wheels are used in a bicycle, wheelchairs or any similar kind of vehicle, the vehicle becomes heavy, and which further negatively impacts overall efficiency of the vehicle as the metallic spokes in rim acts as a highly ineffective suspension.

In these conventional heavy wheels, a separate suspension system needs to be arranged which is having single axis motion system having a greater number of joints, therefore, making its part replacement difficult and also adding additional cost in the replacement. The assembly of such wheels is not user friendly due to high number of spokes provided in the rim, instead in case of every small maintenance, the user would have to engage a mechanic, which is inconvenient and time and money consuming for the user. The single axis motion system does not provide enough safety in cases of accidents. Such suspension system also requires regular maintenance of air and oil.

Further, the process of assembly between rim and spokes to form the entire wheel suspension is time consuming as it involves wheel alignment, tightening of spokes from hub to rim end. Also, the suspension mountings requiring extra parts are again welded, bolted through joint using different process, leading to overall increasing paint area, finishing process, labor work and ultimately making it cost ineffective.

Further, riding vehicles having such conventional spoke suspension system also causes back injuries to the rider, hence, making the riding experience uncomfortable. There are issues been reported about breakdown in vehicle's fork due to the above inefficient single axis suspension system. The chassis of vehicle of such a suspension system is not uni-structure, there are joints like swing arm assemble which prevents uniform load transfer, thereby, reducing chassis life. The chassis life is also impacted by high vibrations, which very often results in breakage of the joints, welds of the chassis, again increasing cost of repair and time.

It has also been seen that connection of spokes having slots at its end with the wheel hub is also not reliable and has tendency to break after a few running cycles of the wheel.

There have been problems at the manufacturer end as with regard to the conventional wheel suspension system. Due to the complicated structure, retrofitting the wheel in Wheelchairs, Bicycles, Two-wheelers, Space rovers, toys, Drones is not easy and also involves joining process such as welding, riveting and bolting, and separate mechanisms such as swing arm, bolts, bushes, new joints/welding and nuts. All these steps ultimately amount to increased labor and manufacturing cost for assembly, more time consuming. The materials used in the manufacturing of such conventional suspension system and usage of excess carbon footprint further add additional cost and because of this, the manufacturers and the end users are remains dissatisfied.

However, many challenges are still there. Some solutions are provided where springs are used in the suspension system for wheel to provide comfort to the rider and reduce the weight of the wheel, but still due the complicated structure and inefficient engineering of the conventional suspension system, the weight of the wheel is still a major problem and that is the reason why running efficiency of the vehicle is affected.

It would be desirable, therefore, to develop an improved single wheel suspension system which is light-weight, structurally simple, easy to manufacture, low cost, efficient in functioning and having long life, and obviates challenges that exists in the prior arts as mentioned above.

Documents GB 2 482 509 A, US 1 021 440 A, US 1 179 974 A and WO 2013/175178 A1 illustrate the technological background of the present invention.

The various objectives and embodiments of the present invention as presented herein are understood to be illustrative of the present invention and not restrictive thereof and are nonlimiting with respect to the scope of the invention.

### Objectives of the Invention

It is a primary object of the present invention to provide a wheel suspension system according to claim 1 which is highly efficient and light weight.

Another primary objective of the present invention is to provide a wheel suspension system which is simple in structure, maintenance friendly and easy to assemble.

Another primary objective of the present invention is to provide a wheel suspension system which is safe even in cases of accidents.

Another primary of the present invention is to provide a wheel suspension system which can be manufactured at a low cost.

It is one of the objectives of the present invention to provide a wheel suspension system that avoids use of oil and air suspensions in wheelchairs, bicycle and other similar vehicles.

It is one of the objectives of the present invention to provide a wheel suspension system whose manufacturing reduces carbon footprints.

It is one of the objectives of the present invention to provide a wheel suspension system having an improved load bearing capacity, thereby helping systems like Wheelchairs qualify for market acceptance.

It is one of the objectives of the present invention to provide a wheel suspension system which is having a long service life.

Another object of the invention is a hub according to claim 15.

### Summary of the Invention

The invention relates to a wheel suspension system according to claim 1 and to a multi-layered hub according to claim 15.

Embodiments, processes and features of the invention will become more fully apparent when the following detailed description is read with the accompanying drawing figures. However, both the foregoing summary of the invention and the following detailed description of it represent one potential embodiment and are not restrictive of the invention or other alternate embodiments of the invention.

### Brief Description of the Drawings

To illustrate the solutions according to the embodiments of the present disclosure more clearly, the accompanying drawings needed for describing the embodiments are introduced below briefly. Apparently, the accompanying drawings in the following descriptions merely show some of the embodiments of the present disclosure, and persons skilled in the art may obtain other drawings according to the accompanying drawings without creative efforts.
Figure 1 illustrates perspective view of the wheel suspension system.
Figure 2 illustrate front view of the wheel suspension system without the rim.
Figure 3 illustrate an exploded view for joining of the suspension member with the hub and adaptor in one embodiment.
Figure 4 illustrate an exploded view for joining of the suspension member with the hub and adaptor in another embodiment.
Figure 5 illustrate the side view of the wheel suspension system without the rim along the section CC.
Figure 6 illustrate a curved elastic suspension member in accordance with one preferred embodiment of the invention.
Figure 7 illustrate a plurality of curved elastic suspension members in accordance with another preferred embodiment of the invention to be used as per the requirement.
Figure 8 illustrate a curved elastic suspension member with slitted ends.
Figure 9 illustrate a plurality of curved elastic suspension members with slitted ends to be used as per the requirement.

### Detailed Description of the Invention

In the present invention, a conventional rim is used, wherein the conventional wheel spoke system is replaced with a multi-axial suspension system in the wheel, wherein the multi-axial suspension system consists of 3 sets of elastic springs, wherein each set is having 2 C shaped springs combining to result in one set of ellipse located between the hub and rim of the wheel, wherein each spring is held by the hub at its center from one of its ends and the other end of the spring is disposed into the adaptor situated along the circumference of the rim.

The hub is designed to be bolted at three points and hold six ends of springs or suspension member at the center. Similarly, there are three adaptors in one rim, wherein each adaptor holds other two ends of the spring. This entire assemble of one hub, three adaptors and six C shaped springs in the manner mentioned above forms an integrated structure with the rim to produce a multi-axial suspension action in a wheel.

As mentioned above, in the integrated wheel suspension system, the wheel usually has the conventional tyre assembled on the rim, wherein when the wheel is made to run on ground, whenever the wheel comes across a obstacle, the springs placed in the wheel is compressed and expanded, hence providing suspension action, wherein the hub shifts along with spring action and get back to its original position after completing the spring action. This overall action provides suspension action within the wheel itself. The forces of impacts, vibrations are resolved inside the rim by the suspension springs thus providing high comfort by reducing the load transfer to the human body, improves the chassis and joint/welds life by reducing the impacts, vibrations coming to vehicle chassis. When hub gets back to its original position, it also provides a forward movement, which further reduces the effort to drive by means of pedalling, battery, petrol/diesel.

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

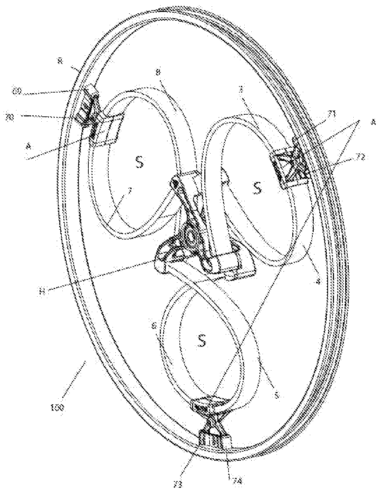

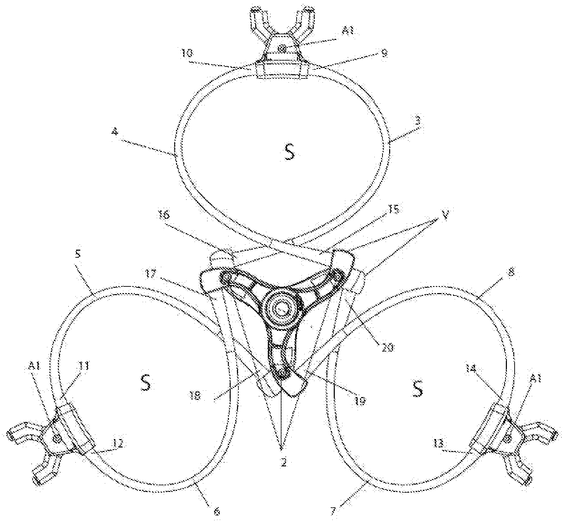

Referring to Figure 1 and Figure 2, in accordance with one embodiment of the present invention, there is provided a wheel suspension system (100) having a rim (R) which can be any ordinary rim generally used in a bicycle or similar vehicle. There are three adaptors (A) equidistantly mounted on the inner periphery of the rim, wherein each adaptor (A) is having a pair of legs (69 & 70 or 71 & 72 or 73 & 74) by way of which it is joined on to the inner surface of the rim (R) along its circumference. There are provided, in total, 3 elliptical suspension members inscribed within the rim (R), wherein each such elliptical suspension member (S) is having a pair of curved elastic suspension members (3 to 8), each having two ends (9-20), wherein one of its end (9-14) is configured to get secured into the adaptor (A) and the other end (15-20) is secured into a hub (H) provided at the centre of the rim (R). Therefore, the elliptical suspension members (S) equidistantly located within the rim (R) by way of infixing connection with the adaptors on the rim (R) periphery and hub (H). The hub (H) provided at the centre is having 2 layers interlocked with each other by way of their complementary structure connecting with each other, wherein each layer of the hub (H) is provided with 3 holders (V) as vertex extended away from its centre towards the rim (R). Further, the holders (V) of first layer (H1) of the hub (H) are interlocked with the holders (V) of the second layer (H2) of the hub (H), wherein the interlocking takes place by way of twisted complementary configuration of the holders (V) of the first layer with respect to holders (H) of the second layer. Further, other than the interlocking, the first and second layer of the hub (H) is joined with each by way of three bolting across the line of axis (2). Further, one of the ends (9 to 14) of the curved elastic suspension members (3 to 8) are configured to be received by the receivers (1.1) of the adaptors (A) from two sides along the circumference of the rim (R) and the other ends (15 to 20) of the curved elastic suspension members (3 to 8) are configured to be secured into the holders (V) of the hub (H).

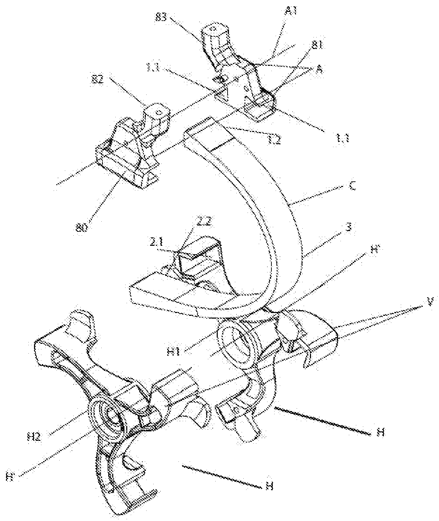

Referring to figure 3, in accordance with a preferred embodiment of the present invention, a curved elastic suspension member (C) having two ends (2.2 and 1.2), wherein one end (2.2) is secured into slots (2.1) of the holder (V) provided in each layer (H1 and H2) of the hub (H), wherein the other end (1.2) is secured into the groove of the receiver (1.1) of the adaptor (A), wherein the adaptor (A) is having a male member (80) and a female member (81 attached to each other via fastening means along the axis (A1), each having a leg (69 & 70 or 71 & 72 or 73 & 74) and top members (82 and 83)extended above the legs, joined by way of the fastening means along the axis (A1). When, in the above configuration, the two ends (2.2 and 1.2) of all the elastic suspension members are secured, the positioning of all the elastic members is locked for providing an effective suspension to the wheel. Further, the height of said top members (82 and 83) above the receiver of the adaptors (A) can be varied as per the diameter of the wheel. This will enable absorbing shocks to be received by the wheel while it is moving on the road, thereby ensuring smooth movement of the wheel irrespective of the road surface for providing comfort to the rider. In this manner, the service life of the wheel is also enhanced.

Further, in the above embodiment, the first hub layer (H1) and second hub layer (H2) is attached to each other along the axis H' to form a bi-layered hub for holding one of the ends of the curved suspension elastic member (C), wherein the holders (V) at three vertex of the first layer hub (H1) for holding the ends of the elastic member (C) are oriented in clockwise direction whereas the holders (V) at three vertex of the second layer hub (H2) for holding the ends of the elastic member (C) are oriented in anticlockwise direction. This orientation enables both the layer to get interlocked firmly with each other and supports formation of the elliptical structure (S) with the help of suspension elastic member (C) between the rim (R) and the and the hub (H).

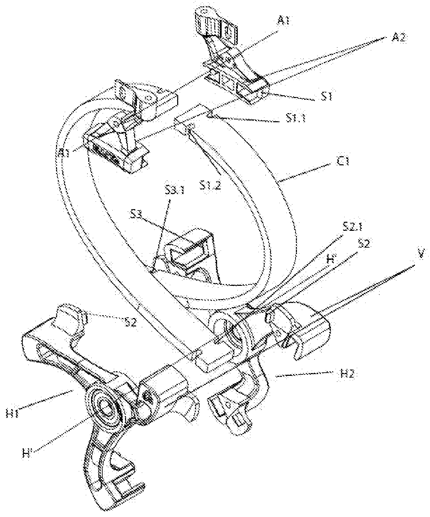

Referring to figure 4, in accordance with another preferred embodiment of the present invention, a curved elastic suspension member (C1) having two ends, wherein one of the ends is provided with two slits (S1.1 and S1.2), wherein said slits are affixed into the grooves (S1) provided in the adaptor (A2), whereas the other end of the curved elastic suspension member (C1) is also provided with two slits (S3.1 and S3.2), wherein one of the slits (3.1) is configured to be secured on to the slot (S3) of the holder (V) and the other slit (not shown) is configured to be affixed on to the protrusion (S2) of the holder (V) provided in each layer (H1 and H2) of the hub (H).

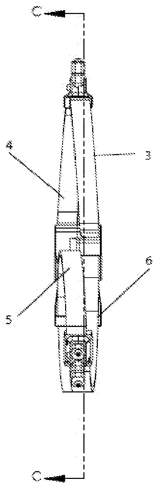

Referring to figure 5, a side view of the elliptical suspension members (S) arranged in accordance with one of the above embodiments along the section CC is shown, illustrating the curved elastic member (3, 4, 5 and 6) to be non-planar with respect to each other and oriented at angles enabling the elliptical suspension members (S) create a balanced distribution of stress and strain among them. This arrangement helps in appropriate compression and relaxation of the wheel suspension system for absorbing shocks. Therefore, the rider does not feel jerk or discomfort while crossing a breaker or potholes or any kind of non-uniformity on road while riding the vehicle or wheelchair.

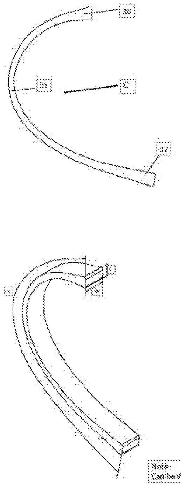

Referring to figure 6, a curved elastic member (C) to be used in a wheel suspension system (100) in one of the above preferred embodiments, is having drafted ends, i.e. having angular variation along the thickness, width and length at ends. It can be seen that thethe ends (30 and 32) are angularly dimensioned across their thickness (T) and width (W), and preferably, more than the remaining length (L) of the curved elastic member (C).

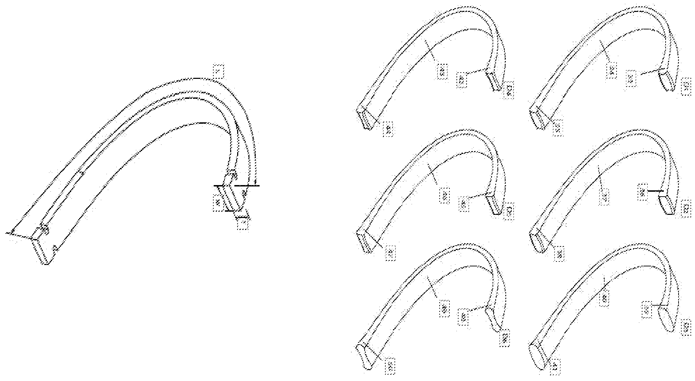

Referring to figure 7, in accordance with one embodiment, a curved elastic member (D1) to be used in a wheel suspension system (100)of any of the above embodiments, wherein the ends (33 and 35) are drafted such that they are vertically bulged and horizontally depressed as compared to the remaining length (49) of the curved elastic member (D6).

Further, in another embodiment, a curved elastic member (D2) to be used in a wheel suspension system (100) of any of the above embodiments, wherein the ends (36 and 38) are drafted such that they are vertically bulged and horizontally same as the remaining length (37) of the a curved elastic member (D2).

Further, in yet another embodiment, a curved elastic member (D3) to be used in a wheel suspension system (100) of any of the above embodiments, wherein the ends (39 and 41) are drafted such that their cross section becomes elliptical and not square like the remaining cross section of the curved elastic member (D3).

Further, in yet another embodiment, a curved elastic member (D4) to be used in a wheel suspension system (100) of any of the above embodiments, wherein the ends (42 and 44) are drafted such that they are vertically depressed and horizontally same as the remaining length (43) of the curved elastic member (D4).

Further, in another embodiment, a curved elastic member (D5) to be used in a wheel suspension system (100) of any of the above embodiments, wherein the ends (45 and 47) are drafted such that they are vertically depressed from their outer sider and same as the remaining length on the inner side, and horizontally same as the remaining length of the curved elastic member (D5).

Further in another embodiment, a curved elastic member (D5) to be used in a wheel suspension system (100) of any of the above embodiments, wherein the ends (45 and 47) are drafted such that they are vertically depressed from their outer side and same as the remaining length on the inner side, and horizontally same as the remaining length of the curved elastic member (D5).

Further, in another embodiment, a curved elastic member (D6) to be used in a wheel suspension system (100) of any of the above embodiments, wherein the ends (48 and 50) are drafted such that they are vertically depressed from both their outer side and inner side and horizontally bulged as compared to the remaining length (49) of the curved elastic member (D6).

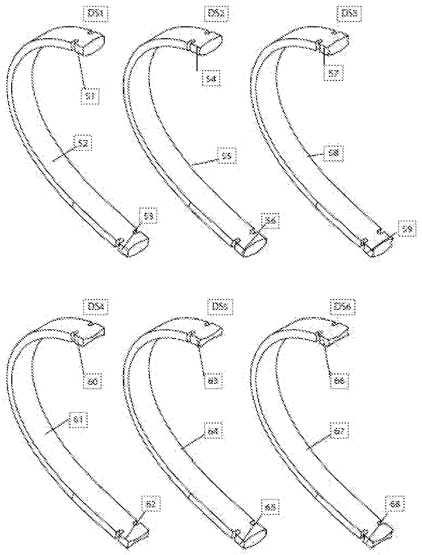

Referring to Figure 8, in accordance with one embodiment, a curved elastic member (C) to be used in a wheel suspension system (100) in one of the above preferred embodiments, is having slitted ends, i.e. having angular cut along the width (W) at ends.

Referring to figure 9, in accordance with another embodiment, the curved elastic member (Ds1, DS2, DS3, DS4, DS5 and DS6) are having slotted ends and the same configuration as disclosed in figure 7. The description for the configurations can be found above.

## Claims

1. A Wheel Suspension System (100), comprising:
a wheel rim (R);
a plurality of adaptors (A), each having at least two receivers (1.1), equidistantly mounted on inner periphery of the wheel rim (R);
a plurality of suspension curved elastic members (3 to 8) each having at least two drafted ends (9 to 20), wherein one end (9 to 14) of each of the member (3 to 8) is configured to be circumferentially disposed into the receiver (1.1) of the adaptor (A) along the wheel rim (R); and
a hub (H) configured to comprise a plurality of interlocked holders (V) having one or more slots, extending away from its centre towards the wheel rim (R) for interlocking another end (15-20) of the elastic members (3 to 8),
**characterized in that**:
the hub (H) is multi-layered and having two layers (H1, H2) interlocked with each other by way of their complementary structure connecting with each other, wherein each layer (H1, H2) of the hub (H) is provided with three holders (V) as vertex extended away from its centre towards the rim (R);
the holders (V) of first layer (H1) of the hub (H) are interlocked with the holders (V) of second layer (H2) of the hub (H), wherein the interlocking takes place by way of twisted complementary configuration of the holders (V) of the first layer (H1) with respect to the holders (H) of the second layer (H2); and
the first hub layer (H1) and the second hub layer (H2) are attached to each other to form a bi-layered hub (H) for holding one of the ends of the curved suspension elastic members (3 to 8), wherein the holders (V) at vertex of the first layer hub (H1) for holding the ends of the elastic members (3, 5, 7) are oriented in clockwise direction whereas the holders (V) at vertex of the second layer hub (H2) for holding the ends of the elastic members (4, 6, 8) are oriented in anticlockwise direction.

2. The wheel suspension system as claimed in claim 1, wherein said ends (9 to 20) of the suspension curved elastic members (3 to 8) are having thickness greater or lesser than the thickness of remaining portion (L) of the elastic member (3 to 8) for interlocking the suspension member (3 to 8) with the hub (H) and the adaptor (A).

3. The wheel suspension system as claimed in claim 1, wherein said ends (9 to 20) of the suspension curved elastic members (3 to 8) are having a width greater or lesser than the width of the remaining portion (L) of the elastic member (3 to 8) for interlocking the suspension member (3 to 8) with the hub (H) and the adaptor (A).

4. The wheel suspension system as claimed in claim 1, wherein said ends (9 to 20) of the suspension curved elastic members (3 to 8) are having a width or thickness greater or lesser than the thickness or width of slot of the holder (H) and groove (S1) of the receiver (1.1) of the adaptor (A) for interlocking the suspension member (3 to 8) with the hub (H) and adaptor (A).

5. The wheel suspension system as claimed in claim 1, wherein said suspension curved elastic member (3 to 8) is having varying thickness along its circumference.

6. The wheel suspension system as claimed in claim 1, wherein said suspension curved elastic member (3 to 8) is having varying width along its circumference.

7. The wheel suspension system as claimed in claim 1, wherein said ends (9 to 20) of the suspension curved elastic members (3 to 8) are provided with one or more slits (S1.1 and S1.2) having structure complementary to the structure of the receiver (1.1) of the adaptor (A) and slot (2.1) of the holder for interlocking the suspension member (3 to 8) with the hub (H) and adaptor (A).

8. The wheel suspension system as claimed in claim 1, wherein said ends (9 to 20) of the suspension curved elastic members (3 to 8) are solid ends having structure complementary to the structure of groove (S1) of the receiver (1.1) of the adaptor (A) and slot (2.1) in the holder (H) for interlocking the suspension members (3 to 8) with the hub (H) and adaptor (A).

9. The wheel suspension system as claimed in claim 1, wherein each said interlocked holder(H) is having two slots (2.1) each corresponding to fixing one end of the elastic suspension members (3 to 8).

10. The wheel suspension system as claimed in claim 1, wherein each said holder (H) is directed in a plane different than the other holders.

11. The wheel suspension system as claimed in claim 1, wherein said each suspension curved elastic member (3 to 8) is having a C-shape.

12. The wheel suspension system as claimed in claim 1, wherein a pair of the suspension curved elastic members (3 to 8) are oppositely arranged and disposed into their respective receivers (1.1) of the same adaptor (A) and interlocked holder (H).

13. The wheel suspension system as claimed in claim 1, wherein the pair of the suspension curved elastic members (3 to 8) when disposed oppositely into their respective receivers (1.1) of the same adaptor (A) and interlocked holder (H), together forms an elliptical structure between the wheel rim (R) and the hub (H).

14. The wheel suspension system as claimed in claim 1, wherein said hub (H) is configured to mount a brake and/or gears and/or sprocket arrangement.

15. A hub (H) for a wheel having a rim (R), comprising : a plurality of interlocked holders (H) having one or more slots, extending away from centre of the hub (H) for interlocking one or more ends of one or more of suspension members (3 to 8) disposed in plane of the wheel between the rim (R) and the hub (H),
**characterized in that**:
the hub (H) is multi-layered and having two layers (H1, H2) interlocked with each other by way of their complementary structure connecting with each other, wherein each layer (H1, H2) of the hub (H) is provided with three holders (V) as vertex extended away from its centre, and in use towards the rim (R);
the holders (V) of first layer (H1) of the hub (H) are interlocked with the holders (V) of second layer (H2) of the hub (H), wherein the interlocking takes place by way of twisted complementary configuration of the holders (V) of the first layer (H1) with respect to the holders (H) of the second layer (H2); and
the first hub layer (H1) and the second hub layer (H2) are attached to each other to form a bi-layered hub (H) for, in use, holding one of the ends of the curved suspension elastic members (3 to 8), wherein the holders (V) at vertex of the first layer hub (H1) for, in use, holding the ends of the elastic members (3, 5, 7) are oriented in clockwise direction whereas the holders (V) at vertex of the second layer hub (H2) for, in use, holding the ends of the elastic members (4, 6, 8) are oriented in anticlockwise direction.

## Patentansprüche

1. - Radaufhängungssystem (100), umfassend:
eine Felge (R);
eine Vielzahl von Adaptern (A), die jeweils mindestens zwei Aufnahmen (1.1) aufweisen, in gleichem Abstand montiert am Innenumfang der Felge (R);
eine Vielzahl gekrümmter elastischer Aufhängungselemente (3 bis 8), die jeweils mindestens zwei ausgeformte Enden (9 bis 20) aufweisen, wobei ein Ende (9 bis 14) von jedem der Elemente (3 bis 8) konfiguriert ist, um entlang der Felge (R) in Umfangsrichtung in der Aufnahme (1.1) des Adapters (A) angeordnet zu sein; und
eine Nabe (H), die konfiguriert ist, um eine Vielzahl verriegelter, einen oder mehrere Schlitze aufweisender Halter (V) zu umfassen, die sich von ihrer Mitte zu der Felge (R) erstrecken, um ein anderes Ende (15 bis 20) der elastischen Aufhängungselemente (3 bis 8) zu verriegeln,
**dadurch gekennzeichnet, dass**:
die Nabe (H) mehrschichtig ist und zwei Schichten (H1, H2) aufweist, die dadurch miteinander verriegelt sind, dass ihre komplementären Strukturen miteinander verbunden sind, wobei jede Schicht (H1, H2) der Nabe (H) mit drei Haltern (V) als Scheitelpunkte beabstandet von ihrer Mitte zu der Felge (R) versehen ist;
die Halter (V) der ersten Schicht (H1) der Nabe (H) mit den Haltern (V) der zweiten Schicht (H2) der Nabe (H) verriegelt sind, wobei die Verriegelung mittels einer verdrillten komplementären Konfiguration der Halter (V) der ersten Schicht (H1) in Bezug auf die Halter (H) der zweiten Schicht (H2) erfolgt; und
die erste Nabenschicht (H1) und die zweite Nabenschicht (H2) aneinander angebracht sind, um eine zweischichtige Nabe (H) zum Halten eines der Enden der gekrümmten elastischen Aufhängungselemente (3 bis 8) zu bilden, wobei die Halter (V) an dem Scheitelpunkt der ersten Nabenschicht (H1) zum Halten der Enden der elastischen Aufhängungselemente (3, 5, 7) im Uhrzeigersinn ausgerichtet sind, während die Halter (V) an dem Scheitelpunkt der zweiten Nabenschicht (H2) zum Halten der Enden der elastischen Aufhängungselemente (4, 6, 8) entgegen dem Uhrzeigersinn ausgerichtet sind.

2. - Radaufhängungssystem nach Anspruch 1, wobei die Enden (9 bis 20) der gekrümmten elastischen Aufhängungselemente (3 bis 8) eine Stärke aufweisen, die größer oder kleiner als die Stärke des verbleibenden Abschnitts (L) des elastischen Aufhängungselements (3 bis 8) ist, um das Aufhängungselement (3 bis 8) mit der Nabe (H) und dem Adapter (A) zu verriegeln.

3. - Radaufhängungssystem nach Anspruch 1, wobei die Enden (9 bis 20) der gekrümmten elastischen Aufhängungselemente (3 bis 8) eine Breite aufweisen, die größer oder kleiner als die Breite des verbleibenden Abschnitts (L) des elastischen Aufhängungselements (3 bis 8) ist, um das Aufhängungselement (3 bis 8) mit der Nabe (H) und dem Adapter (A) zu verriegeln.

4. - Radaufhängungssystem nach Anspruch 1, wobei die Enden (9 bis 20) der gekrümmten elastischen Aufhängungselemente (3 bis 8) eine Breite oder Stärke aufweisen, die größer oder kleiner als die Stärke oder Breite des Schlitzes des Halters (H) und der Nut (S1) der Aufnahme (1.1) des Adapters (A) ist, um das Aufhängungselement (3 bis 8) mit der Nabe (H) und dem Adapter (A) zu verriegeln.

5. - Radaufhängungssystem nach Anspruch 1, wobei das gekrümmte elastische Aufhängungselement (3 bis 8) entlang seines Umfangs eine variierende Stärke aufweist.

6. - Radaufhängungssystem nach Anspruch 1, wobei das gekrümmte elastische Aufhängungselement (3 bis 8) entlang seines Umfangs eine variierende Breite aufweist.

7. - Radaufhängungssystem nach Anspruch 1, wobei die Enden (9 bis 20) der gekrümmten elastischen Aufhängungselemente (3 bis 8) mit einem oder mehreren Einschnitten (S1.1 und S1.2) versehen sind, deren Struktur zu der Struktur der Aufnahme (1.1) des Adapters (A) und des Schlitzes (2.1) des Halters komplementär ist, um das Aufhängungselement (3 bis 8) mit der Nabe (H) und dem Adapter (A) zu verriegeln.

8. - Radaufhängungssystem nach Anspruch 1, wobei die Enden (9 bis 20) der gekrümmten elastischen Aufhängungselemente (3 bis 8) massive Enden sind, deren Struktur zu der Struktur der Nut (S1) der Aufnahme (1.1) des Adapters (A) und des Schlitzes (2.1) in dem Halter (H) komplementär ist, um die Aufhängungselemente (3 bis 8) mit der Nabe (H) und dem Adapter (A) zu verriegeln.

9. - Radaufhängungssystem nach Anspruch 1, wobei jeder der verriegelten Halter (H) zwei Schlitze (2.1) aufweist, die jeweils zum Befestigen eines Endes eines der elastischen Aufhängungselemente (3 bis 8) sind.

10. - Radaufhängungssystem nach Anspruch 1, wobei jeder der Halter (H) in einer anderen Ebene als die anderen Halter ausgerichtet ist.

11. - Radaufhängungssystem nach Anspruch 1, wobei jedes der gekrümmten elastischen Aufhängungselemente (3 bis 8) C-förmig ist.

12. - Radaufhängungssystem nach Anspruch 1, wobei ein Paar der gekrümmten elastischen Aufhängungselemente (3 bis 8) entgegengesetzt angeordnet und in ihren jeweiligen Aufnahmen (1.1) desselben Adapters (A) und verriegelten Halters (H) angeordnet ist.

13. - Radaufhängungssystem nach Anspruch 1, wobei das Paar der gekrümmten elastischen Aufhängungselemente (3 bis 8), wenn es entgegengesetzt in seinen jeweiligen Aufnahmen (1.1) desselben Adapters (A) und verriegelten Halters (H) angeordnet ist, zusammen eine elliptische Struktur zwischen der Felge (R) und der Nabe (H) bildet.

14. - Radaufhängungssystem nach Anspruch 1, wobei die Nabe (H) zum Montieren einer Bremse und/oder von Zahnrädern und/oder einer Kettenradanordnung konfiguriert ist.

15. - Nabe (H) für ein Rad, das eine Felge (R) aufweist, umfassend: eine Vielzahl verriegelter, einen oder mehrere Schlitze aufweisender Halter (V), die sich von der Mitte der Nabe (H) erstrecken, um ein oder mehrere Enden eines oder mehrerer der Aufhängungselemente (3 bis 8), die in der Ebene des Rads zwischen der Felge (R) und der Nabe (H) angeordnet sind, zu verriegeln,
**dadurch gekennzeichnet, dass**:
die Nabe (H) mehrschichtig ist und zwei Schichten (H1, H2) aufweist, die dadurch miteinander verriegelt sind, dass ihre komplementären Strukturen miteinander verbunden sind, wobei jede Schicht (H1, H2) der Nabe (H) mit drei Haltern (V) als Scheitelpunkte beabstandet von ihrer Mitte und im Gebrauch zu der Felge (R) hin versehen ist;
die Halter (V) der ersten Schicht (H1) der Nabe (H) mit den Haltern (V) der zweiten Schicht (H2) der Nabe (H) verriegelt sind, wobei die Verriegelung mittels einer verdrillten komplementären Konfiguration der Halter (V) der ersten Schicht (H1) in Bezug auf die Halter (H) der zweiten Schicht (H2) erfolgt; und
die erste Nabenschicht (H1) und die zweite Nabenschicht (H2) aneinander angebracht sind, um eine zweischichtige Nabe (H) zu bilden, um im Gebrauch eines der Enden der gekrümmten elastischen Aufhängungselemente (3 bis 8) zu halten, wobei die Halter (V) an dem Scheitelpunkt der ersten Nabenschicht (H1) zum Halten, im Gebrauch, der Enden der elastischen Aufhängungselemente (3, 5, 7) im Uhrzeigersinn ausgerichtet sind, während die Halter (V) an dem Scheitelpunkt der zweiten Nabenschicht (H2) zum Halten, im Gebrauch, der Enden der elastischen Aufhängungselemente (4, 6, 8) entgegen dem Uhrzeigersinn ausgerichtet sind.

## Revendications

1. - Système de suspension de roue (100), comprenant :
une jante (R) ;
une pluralité d'adaptateurs (A), chacun comportant au moins deux logements (1.1), montés à égale distance sur une périphérie interne de la jante (R) ;
une pluralité d'éléments élastiques incurvés (3 à 8), chacun comportant au moins deux extrémités profilées (9 à 20), une extrémité (9 à 14) de chacun des éléments (3 à 8) étant configurée pour être disposée de manière circonférentielle dans le logement (1.1) de l'adaptateur (A) le long de la jante (R) ; et
un moyeu (H) configuré pour comprendre une pluralité de supports imbriqués (V) comportant une ou plusieurs fentes, s'étendant depuis son centre vers la jante (R) pour imbriquer une autre extrémité (15 à 20) des éléments élastiques (3 à 8),
**caractérisé par le fait que** :
le moyeu (H) est multicouche et comporte deux couches (H1, H2) imbriquées l'une avec l'autre au moyen de leur structure complémentaire qui les relie entre elles, chaque couche (H1, H2) du moyeu (H) comportant trois supports (V), formant un sommet, s'étendant depuis son centre vers la jante (R) ;
les supports (V) de la première couche (H1) du moyeu (H) s'imbriquent avec les supports (V) de la seconde couche (H2) du moyeu (H), l'imbrication s'effectuant grâce à une configuration complémentaire torsadée des supports (V) de la première couche (H1) par rapport aux supports (V) de la seconde couche (H2) ; et
la première couche de moyeu (H1) et la seconde couche de moyeu (H2) sont fixées l'une à l'autre pour former un moyeu à deux couches (H) destiné à maintenir l'une des extrémités des éléments élastiques incurvés de suspension (3 à 8), les supports (V) au sommet de la première couche de moyeu (H1) et destinés à maintenir les extrémités des éléments élastiques (3, 5, 7) étant orientés dans le sens des aiguilles d'une montre, tandis que les supports (V) au sommet de la seconde couche de moyeu (H2) et destinés à maintenir les extrémités des éléments élastiques (4, 6, 8), sont orientés dans le sens inverse des aiguilles d'une montre.

2. - Système de suspension de roue selon la revendication 1, dans lequel lesdites extrémités (9 à 20) des éléments élastiques incurvés de suspension (3 à 8) ont une épaisseur supérieure ou inférieure à l'épaisseur de la partie restante (L) de l'élément élastique (3 à 8) afin d'imbriquer l'élément de suspension (3 à 8) avec le moyeu (H) et l'adaptateur (A).

3. - Système de suspension de roue selon la revendication 1, dans lequel lesdites extrémités (9 à 20) des éléments élastiques incurvés de suspension (3 à 8) ont une largeur supérieure ou inférieure à la largeur de la partie restante (L) de l'élément élastique (3 à 8) afin d'imbriquer l'élément de suspension (3 à 8) avec le moyeu (H) et l'adaptateur (A).

4. - Système de suspension de roue selon la revendication 1, dans lequel lesdites extrémités (9 à 20) des éléments élastiques incurvés de suspension (3 à 8) ont une largeur ou épaisseur supérieure ou inférieure à l'épaisseur ou la largeur de la fente du support (H) et d'une rainure (S1) du logement (1.1) de l'adaptateur (A) afin d'imbriquer l'élément de suspension (3 à 8) avec le moyeu (H) et l'adaptateur (A).

5. - Système de suspension de roue selon la revendication 1, dans lequel ledit élément élastique incurvé de suspension (3 à 8) a une épaisseur variable sur sa circonférence.

6. - Système de suspension de roue selon la revendication 1, dans lequel ledit élément élastique incurvé de suspension (3 à 8) a une largeur variable sur sa circonférence.

7. - Système de suspension de roue selon la revendication 1, dans lequel lesdites extrémités (9 à 20) des éléments élastiques incurvés de suspension (3 à 8) comportent une ou plusieurs fentes (S1.1 et S1.2) présentant une structure complémentaire à celle du logement (1.1) de l'adaptateur (A) et de la fente (2.1) du support, afin d'imbriquer l'élément de suspension (3 à 8) avec le moyeu (H) et l'adaptateur (A).

8. - Système de suspension de roue selon la revendication 1, dans lequel lesdites extrémités (9 à 20) des éléments élastiques incurvés de suspension (3 à 8) sont des extrémités pleines présentant une structure complémentaire à celle de la rainure (S1) du logement (1.1) de l'adaptateur (A) et de la fente (2.1) dans le support (H) afin d'imbriquer les éléments de suspension (3 à 8) avec le moyeu (H) et l'adaptateur (A).

9. - Système de suspension de roue selon la revendication 1, dans lequel chacun desdits supports (H) imbriqués comporte deux fentes (2.1) correspondant chacune à la fixation d'une extrémité des éléments élastiques de suspension (3 à 8).

10. - Système de suspension de roue selon la revendication 1, dans lequel chacun desdits supports (H) est orienté dans un plan différent de celui des autres supports.

11. - Système de suspension de roue selon la revendication 1, dans lequel chacun desdits éléments élastiques incurvés de suspension (3 à 8) présente une forme en C.

12. - Système de suspension de roue selon la revendication 1, dans lequel une paire d'éléments élastiques incurvés de suspension (3 à 8) sont agencés de manière opposée et disposés dans leurs logements (1.1) respectifs du même adaptateur (A) et du même support (H) imbriqué.

13. - Système de suspension de roue selon la revendication 1, dans lequel la paire d'éléments élastiques incurvés de suspension (3 à 8), lorsqu'ils sont disposés de manière opposée dans leurs logements (1.1) respectifs du même adaptateur (A) et du même support (H) imbriqué, forment ensemble une structure elliptique entre la jante (R) et le moyeu (H).

14. - Système de suspension de roue selon la revendication 1, dans lequel ledit moyeu (H) est configuré pour recevoir un frein et/ou des engrenages et/ou un agencement de pignon.

15. - Moyeu (H) pour une roue comportant une jante (R), comprenant : une pluralité de supports imbriqués (H) comportant une ou plusieurs fentes, s'étendant depuis le centre du moyeu (H) pour imbriquer une ou plusieurs extrémités d'un ou plusieurs éléments de suspension (3 à 8) disposés dans le plan de la roue entre la jante (R) et le moyeu (H),
**caractérisé par le fait que** :
le moyeu (H) est multicouche et comporte deux couches (H1, H2) imbriquées l'une avec l'autre au moyen de leur structure complémentaire qui les relie entre elles, chaque couche (H1, H2) du moyeu (H) comportant trois supports (V), formant un sommet, s'étendant depuis son centre et, en utilisation, vers la jante (R) ;
les supports (V) de la première couche (H1) du moyeu (H) s'imbriquent avec les supports (V) de la seconde couche (H2) du moyeu (H), l'imbrication s'effectuant au moyen d'une configuration complémentaire torsadée des supports (V) de la première couche (H1) par rapport aux supports (V) de la seconde couche (H2) ; et
la première couche de moyeu (H1) et la seconde couche de moyeu (H2) sont fixées l'une à l'autre pour former un moyeu à deux couches (H) destiné, en utilisation, à maintenir l'une des extrémités des éléments élastiques incurvés de suspension (3 à 8), les supports (V) au sommet de la première couche de moyeu (H1), destinés, en utilisation, à maintenir les extrémités des éléments élastiques (3, 5, 7) étant orientés dans le sens des aiguilles d'une montre, tandis que les supports (V) au sommet de la seconde couche de moyeu (H2), destinés, en utilisation, à maintenir les extrémités des éléments élastiques (4, 6, 8), étant orientés dans le sens inverse des aiguilles d'une montre.
